# EUROPEAN PATENT APPLICATION

(11) **EP 1 931 082 A1**
(43) Date of publication of application: **11.06.2008**
(21) Application number: 07119329.6
(22) Date of filing: 25.10.2007
(51) Int. Cl.: H04L 12/18

(54) **Method and apparatus for multicasting data**

(30) Priority: 07.12.2006 KR 20060124047
(71) Applicant: Samsung Electronics Co., Ltd., Suwon-si, Gyeonggi-do 442-742 (KR)
(72) Inventor: Shin, Seung-woo, Giheung-gu, Yongin-si, Gyeonggi-do (KR); Shin, Seung-woo, Giheung-gu, Yongin-si, Gyeonggi-do (KR)
(74) Representative: Clark, David James

(57) **Abstract**

A method of and apparatus for multicasting data. The method used by a server (20) for multicasting data to a plurality of clients (211, 212, 221) includes receiving information on reception environments from the clients; classifying the clients into a plurality of groups (21, 22) based reception environments included in the received information; and multicasting data in which a different error correction method is applied to each group. In this way, while using a narrow bandwidth, the quality of service (QoS) of the data multicasting can be guaranteed.

## Description

### BACKGROUND OF THE INVENTION

### 1. Field of the Invention

Aspects of the present invention relate to a method and apparatus for multicasting data and, more particularly but not exclusively, to a method and apparatus for multicasting data from a server to a plurality of clients while the server efficiently guarantees quality of service (QoS).

### 2. Description of the Related Art

Methods of guaranteeing reliability of data transmission currently in use can be broken down into two kinds: an automatic repeat request (ARQ) method and a forward error correction (FEC) method. According to the ARQ method, a client transmits an acknowledgement (ACK) message to a server as feedback to indicate that data transmitted from the server was received properly. If a confirmation message for a data packet is received, the server does not retransmit the data packet. If the confirmation message is not received, the server retransmits the data packet even without a request for transmission. By retransmitting all data packets for which a confirmation message is not received, the client normally receives all data packets. This method is used when data is transmitted according to a transmission control protocol (TCP).

In the FEC method, a client does not transmit a confirmation message. Information on whether or not the client properly receives data is not transmitted to a server. However, in order to correct transmission errors that can occur during transmission of data, the server adds predetermined redundancy data for error correction to the original data. In order to guarantee reliability of data transmission without separate feedback, such as a confirmation message from the client, error correction information is provided with data transmission. This method is used when data is transmitted according to a user datagram protocol (UDP).

The ARQ method can guarantee reliability of data transmission. However, since feedback from a client is received and data packets may be retransmitted according to the feedback, the method is not appropriate for one-to-many data communication, such as multicasting. In particular, when a real-time service, such as a streaming service, is provided through multicasting, a situation may occur in which the data becomes useless because time has elapsed while the data is being retransmitted.

Unlike the ARQ method, the FEC method adds redundancy data for FEC to guarantee reliability of data transmission. Accordingly, the FEC method wastes bandwidth and cannot substantially guarantee reliability of data transmission.

Due to the above drawbacks of the ARQ and FEC methods, a combination of these two methods is often used. One example is data communication using a real-time transport protocol (RTP).

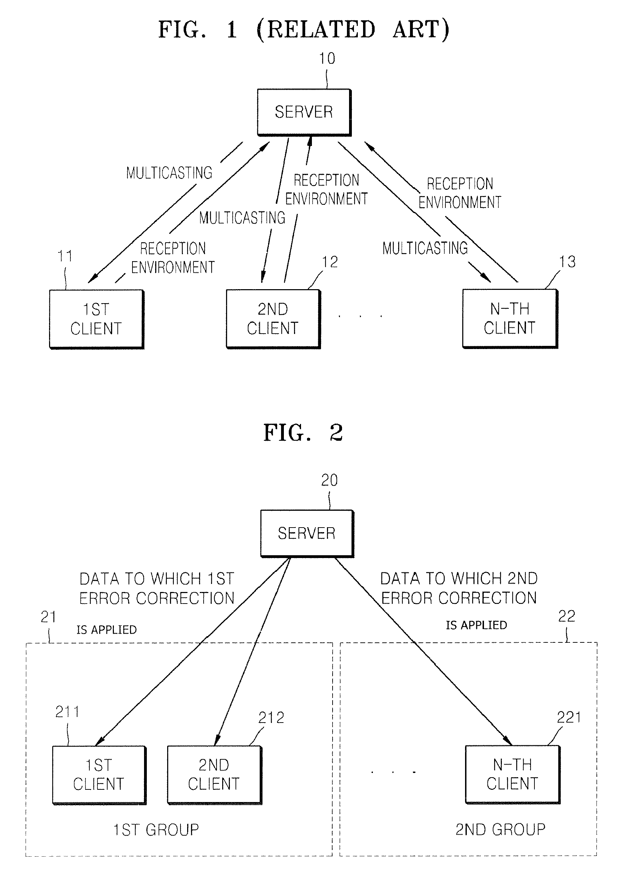

FIG. 1 is a diagram illustrating a method of multicasting data according to a related art. A server 10 multicasts data to a plurality of clients 11 through 13. Identical data is transmitted to all the clients. When the data being multicast is provided in real-time, as in the case of data for a streaming service, the data is transmitted according to the RTP. The clients 11 through 13 receiving the data detect a data packet that is not properly received using information included in the header of an RTP packet, such as a 'sequence number' and a 'timestamp'. If a data packet is not properly received, a real-time transport control protocol (RTCP) or a real-time streaming protocol (RTSP) packet, including information on packet loss, jitter, and the like, is transmitted to the server 10. The RTCP or RTSP packet may be transmitted periodically, or when necessary, may be transmitted immediately when packet loss occurs.

The ARQ method is employed in that the server 10 receives feedback on the reception environment from the clients 11 through 13, but retransmission of data is not performed. Accordingly, when data is transmitted, the server 11 adds redundancy data to original data, which provides FEC.

The server receiving the RTCP or RTSP packet adjusts the QoS for data transmission based on the information on the reception environment included in the received packet, such as packet loss, jitter and the like and transmits the data. According to the reception environment, the QoS of the data transmission is adjusted by changing an FEC method to an appropriate one or by adjusting the size of the redundancy data to be added. However, according to the method illustrated in FIG. 1, if a reception environment of any one client among the clients 11 through 13 gets worse, the QoS of the data transmission is adjusted identically for all clients. For example, if the reception environment of the n-th client 13 gets worse, the server 10 increases the size of the redundancy data added to the original data even though the reception environments of the first client 11 and the second client 12 are good. Accordingly, the size of the redundancy data becomes larger than required, wasting bandwidth.

There may be a method using different sizes of redundancy data in relation to each client in order to solve this problem. In this case, according to whether or not a reception environment is good, a different error correction method is applied individually before transmitting the data. However, this is not appropriate to multicasting, which requires transmission of identical data.

### SUMMARY OF THE INVENTION

According to an aspect of the present invention, a multicasting method used by a server for multicasting data to a plurality of clients is provided. The method includes: receiving information on reception environments from the clients; classifying the clients into a plurality of groups based on the reception environments included in the received information; and multicasting data in which a different error correction method is applied to the data for each group.

Suitably, the multicasting of the data includes applying a different forward error correcting encoding method to the data for each of the groups; and multicasting the data to the respective groups.

Suitably, the multicasting of the data includes adding redundancy data of a different size to the data for each of the groups for forward error correction, and multicasting the data to the respective groups.

Suitably, the multicasting of the data includes generating a real-time transport protocol (RTP) packet by adding redundancy data of a different size to the data for each of the groups for forward error correction; and multicasting the packet to the respective groups.

Suitably, the data includes at least one of Internet protocol television (IPTV) service data and content data.

Suitably, a multicasting apparatus of a server to multicast data to a plurality of clients is provided. The apparatus includes an information reception unit to receive information on reception environments from the clients; a control unit to classify the clients into a plurality of groups based on reception environments included in the received information; and a transmission unit to multicast data by applying a different error correction method to each group.

Suitably, the transmission unit apples a different forward error correcting encoding method to the data for each of the plurality of groups and multicasts the data to the respective groups.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a diagram illustrating a technique of multicasting data according to a related art;
FIG. 2 is a diagram illustrating a technique of multicasting data according to an embodiment of the present invention;
FIG. 3 is a flowchart of a technique used by a server to multicast data according to an embodiment of the present invention;
FIG. 4 is a diagram illustrating a data packet according to an embodiment of the present invention;
FIG. 5 is a flowchart of a technique used by a client to receive data according to an embodiment of the present invention;
FIG. 6 is a diagram illustrating an apparatus for multicasting data of a server according to an embodiment of the present invention; and
FIG. 7 is a diagram illustrating an apparatus of a client for receiving data according to an embodiment of the present invention.

### DETAILED DESCRIPTION OF THE EMBODIMENTS

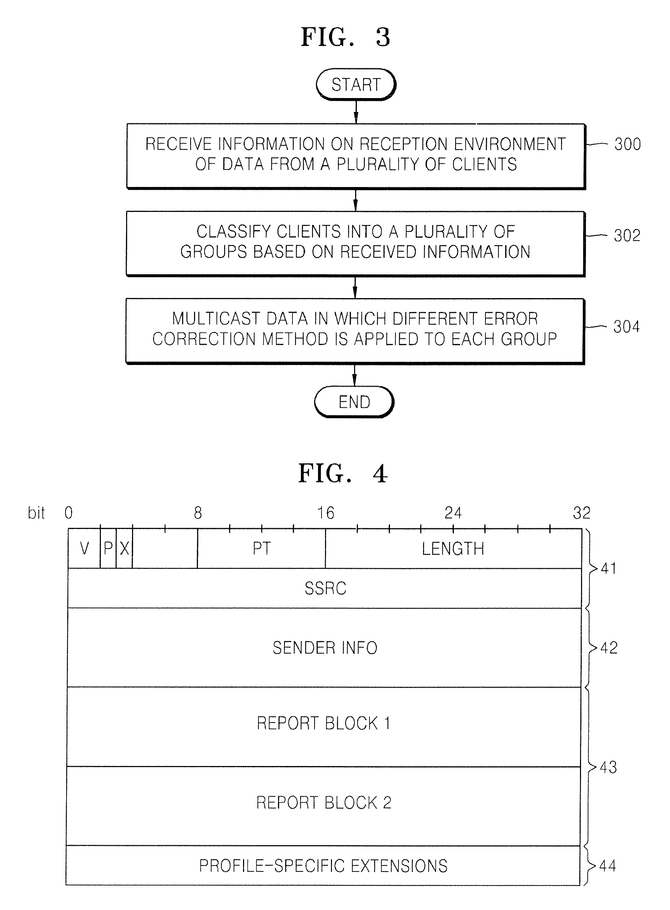

FIG. 2 is a diagram illustrating a method of multicasting data according to an embodiment of the present invention. A server 20 multicasts data to a plurality of clients 11 through 13. The data multicast by the server 20 may be Internet protocol television (IPTV) service data and/or content data. When data is provided in real-time as in a streaming service, multicasting is performed using a real-time transport protocol (RTP). Details of the multicasting using RTP will be explained later with reference to FIG. 4.

In response, each of the clients 211, 212, and 221 includes information on a reception environment of data in a real-time transport control protocol (RTCP) or a real-time streaming protocol (RTSP) packet. The clients 211, 212, and 221 transmit the packet to the server 20. The server 20 receiving the packet classifies the clients 211, 212, and 221 into a plurality of groups 21 and 22 by referring to the information on the reception environment included in the RTCP or RTSP packet. The information may include information on packet loss, jitter, electric field strength, and the like included in the RTCP or RTSP packet. As shown, the server 20 classifies the clients 211 and 212 into the first group 21, and classifies the client 221 into the second group 22, with each group 21 and 22 corresponding to a corresponding range of reception environment information. After classifying the clients 11 through 13 into the plurality of groups 21 and 22, the server 20 applies a different error correction method to each group, and multicasts the data. The data may be multicast according to an RTP. However, other aspects of the invention may employ any protocol to transmit the data to the clients. Additional groups may be added, depending on the information on the reception environment.

If the first group 21 has high packet loss, large jitter, and/or weak electric field strength, an error correction method more robust against an error may be applied to the data to be transmitted to the clients of the first group 21. For example, when forward error correcting (FEC) encoding is performed, more redundancy data is added in order to increase the probability of error correction. The error correction is not limited to FEC; any appropriate error correction method may be employed, depending on the particular environment for each of the groups 21 and 22.

By way of example, if the second group 22 has less packet loss, a smaller jitter, and/or a stronger electric field strength than those of the first group 21, a less robust error correction method is applied. For example, when FEC encoding is performed, less redundancy data is added as compared to that used to transmit to the clients 211 and 212 of the first group 21 before transmitting the data to the client 221 of the second group 22, thereby reducing wastage of bandwidth.

If the server 20 multicasts data after applying different error correction methods to the first group 21 and the second group 22, respectively, the clients 211, 212, and 221 receiving the data should be able to perform error correction by applying different error correction methods. For example, when FEC is performed, how much redundancy data is added for FEC should be known in order to perform error correction. Accordingly, when the server 20 multicasts data to clients, information on the error correction encoding method applied to the data is provided. Information is provided about the group to which a client receiving data is classified. The client performs decoding according to the error correction encoding method applied to the group to which the client belongs.

For example, information indicating that the first client 211 and the second client 212 belong to the first group 21 is transmitted. By referring to the information on the group 21, the first client 211 and the second client 212 receiving the information know in advance that a first error correction method is applied to the multicast data, and perform error correction according to the first error correction method.

The clients 211, 212, and 221 may know in advance the error correction methods that can be performed in relation to transmitted data. Each of the clients 211, 212, and 221 may receive information on only the group to which the client belongs, so that each of the clients 211, 212, and 221 can perform error correction using the error correction method applied to the data transmitted each of the groups 21 and 22.

The error correction method and/or the group information may be included in a separate RTCP or RTSP packet, which is transmitted by the server 20 to the clients in order to control a multicasting session. However, such information can be separately provided or detected from information sent from the server 20.

FIG. 3 is a flowchart illustrating a technique used by a server to multicast data according to an embodiment of the present invention. In operation 300, the server 20 receives information on reception environments of data from a plurality of clients 211, 212, and 221. By way of example, an RTCP or RTSP packet including the information on the reception environment of data from the plurality of clients 211, 212, and 221 may be received in operation 300. Information on the reception environment included in the RTCP or RTSP packet may include information on packet loss, jitter, electric field strength, and the like.

The information on the reception environment may also be transmitted by the clients 211, 212, and 221 as feedback while the server 20 multicasts data. When a multicasting session is established between the server 20 and the clients 211, 212, and 221, the clients 211, 212, and 221 may transmit the information before full-scale multicasting of data begins. However, reception is not so limited.

In operation 302, the server 20 classifies the clients 211, 212, and 221 into the plurality of groups 21 and 22 with respect to reception environments, based on the information received in operation 300. The predetermined groups 21 and 22 are set according to the quality of the reception environment. The clients 211, 212, and 221 that want to receive the multicast data are allocated to the predetermined groups 21 and 22. As shown in FIG. 2, the clients 211 and 212 are allocated to group 21 and the client 221 is allocated to group 22. It is highly probable that the clients 211, 212, and 221 receiving the multicast data in adjacent areas or under similar weather environments have similar reception environments. For example, it is highly probable that a plurality of clients accessing one access point under a wireless local area network (WLAN) environment have similar reception environments. It is also highly probable that a plurality of clients accessing one base station in a wireless broadband (WiBro) network have similar reception environments. Accordingly, clients 211, 212, and 221 having similar reception environments are classified into an identical group. An error correction method appropriate for the reception environment of each group is applied before multicasting the data. The clients 211, 212, and 221 may be classified using any criteria available to the server 20. While described as predetermined, it is understood that the groups can be dynamically defined according to a correction technique used to commonly resolve a reception environment common to pluralities of the clients 211, 212, and 221.

In operation 304, the server 20 multicasts data in which a different error correction method is applied to each of the groups 21 and 22 into which the clients 211, 212, and 221 are classified in operation 302. In the case of a group 21 or 22 having a relatively poor reception environment, such as a group 21 or 22 having high packet loss, large jitter, and/or weak electric field strength, an error correction method more robust against errors is applied to the data being the data is multicast. For example, when FEC encoding is performed, more redundancy data is added in order to increase the probability of error correction, and the data is transmitted.

Conversely, in the case of a group 21 or 22 having a relatively better reception environment, when FEC encoding is performed, less redundancy data is added before transmitting the data. As a result, wasted bandwidth is reduced.

If the server 20 multicasts data by applying different error correction methods with respect to different groups, the clients receiving the data should be able to perform error correction by applying the different error correction methods. Accordingly, the server 20 also transmits information to the clients 211, 212, and 221 on the error correction encoding methods applied to the data.

According to an aspect of the present invention, the server 20 only transmits group information informing a client 211, 212, or 221 receiving the data of a group to which the client 211, 212, or 221 belongs. Before the client 211, 212, or 221 receives the multicast data, if the clients 211, 212, and 221 know in advance which error correction method the server 20 applied to each of the plurality of groups 21 and 22, then the clients 211, 212, and 221 select the appropriate error correction methods according to the group information and perform the appropriate error correction.

As described above, the server 20 may include at least one of an error correction method and group information in a separate RTCP or RTSP packet to be transmitted in order to control a multicasting session. The server 20 transmits the error-corrected packet to the clients 211, 212, and 221.

FIG. 4 is a diagram illustrating an example of an RTCP packet according to an embodiment of the present invention. FIG. 4 shows a case in which the server 20 includes at least one of an error correction method and group information in an RTCP packet to be transmitted in order to control a multicasting session. Since the server 20 is on a transmission side multicasting data, the server 20 includes at least one of an error correction method and group information in an RTCP sender report (SR) packet and transmits the packet to the clients 211, 212, and 221. The RTCP SR packet shown has a header field 41, a sender information field 42, report block fields 42 and 43, and a profile-specific extension field 44.

The profile-specific extension field 44 is a field that a user can define arbitrarily and use to implement a specific purpose. The profile-specific extension field 44 of the RTCP packet may include an error correction method information and/or group information, described above in relation to operation 304 illustrated in FIG. 3. However, according to other aspects of the present invention, other fields might be used or defined.

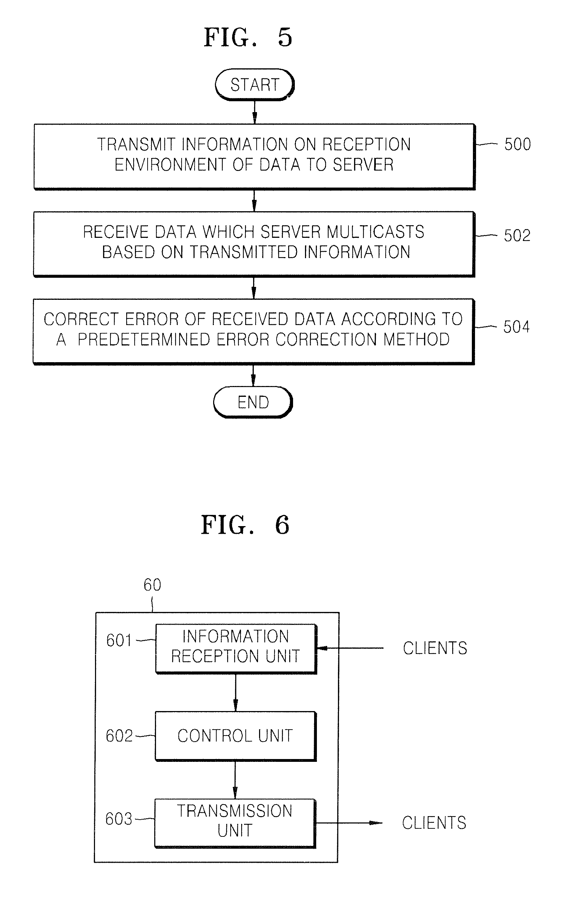

FIG. 5 is a flowchart illustrating a technique used by a client to receive data according to an embodiment of the present invention. In operation 500, a client, such as the client 211 shown in FIG. 2, transmits information on a reception environment of data, to a server 20. The client 211 is receives data multicast by the server 20. The information on the reception environment may include information on packet loss, jitter, electric field strength, and the like, as described above. The information on the reception environment may be transmitted to the server 20 according to the RTCP or RTSP techniques, or according to other protocols.

In operation 502, the client 211 receives data, which is multicast by the server based on the information on the reception environment transmitted in operation 500. The client 211 receives the data to which the server 20 applies a predetermined error correction method in relation to a predetermined group 21 or 22 after classifying the client 211 into the predetermined group 21 or 22 based on the information on the reception environment. As described above, multicasting of the data may be performed according to the RTP.

In operation 504, the client 211 performs error correction of the data received in operation 504 according to the predetermined error correction method. Since the server 20 transmits information on the error correction method applied to the multicast data, as well as the multicast data, to the client 211, the client 211 performs error correction according to the predetermined error correction method based on the information. If the client 211 knows in advance which error correction method the server 20 applies to the data with respect to each of the plurality of groups 21 and 22 and multicasts the data, the client 211 may also be able to perform error correction by receiving only group information indicating to which group the client 211 belongs in other aspects of the present invention.

FIG. 6 is a diagram illustrating an apparatus 60 for multicasting data of the server according to an embodiment of the present invention. The apparatus for multicasting data of a server includes an information reception unit 601, a control unit 602, and a transmission unit 603. The information reception unit 601 receives information on the reception environment of data from the clients 211, 212, and 221. An RTCP or RTSP packet including information on the reception environment of data may be received from the clients 211, 212, and 221. The information on the reception environment included in the RTCP or RTSP packet may include information on packet loss, jitter, electric field strength, and the like.

The control unit 602 classifies the clients 211, 212, and 221 into a plurality of groups 21 and 22 with respect to reception environments based on the received information. Predetermined groups are set according to the quality of the reception environment. The clients 211, 212, and 221 that want to receive multicast data are allocated to predetermined groups. However, the group definitions need not be predetermined but can be dynamically defined. Moreover, the group definitions can be defined by the server 20 or by a content owner.

The transmission unit 603 multicasts data to which a different error correction method is applied in relation to each of the predetermined groups 21 and 22 to which the clients 211, 212, and 221 are allocated. In the case of a group having a relatively poor reception environment, data to which an error correction method more robust against an error is applied is multicast. For example, when FEC encoding is performed, more redundancy data is added in order to increase the probability of error correction. Conversely, in the case of a group having a relatively better reception environment, when FEC encoding is performed, less redundancy data is added, thereby reducing wastage of a bandwidth.

The transmission unit 603 also transmits information to the clients 211, 212, and 221 on an error correction encoding method applied to the data. The information on the error correction encoding method is included by defining a separate field in the header of an RTCP or RTSP packet.

The header may include only group information informing the client 211, 212, or 221 receiving the data of the group 21 or 22 into which the client is classified. If the clients 211, 212, and 221 know in advance which error correction method the transmission unit 603 applies to each of the plurality of groups before it transmits the data, then the clients 211, 212, and 221 select appropriate error correction methods according to the group information and perform error correction.

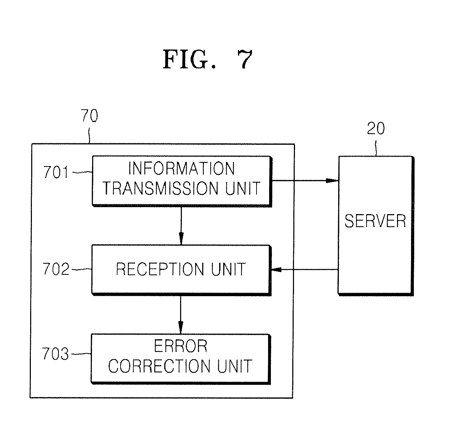

FIG. 7 is a diagram illustrating an apparatus 70 of a client 211, 212, or 221 for receiving data according to an embodiment of the present invention. The apparatus of the client for receiving data includes an information transmission unit 701, a reception unit 702, and an error correction unit 703. The apparatus may be a desktop computer, a portable computer, a mobile phone, a personal digital assistant, a set-top box, a personal entertainment device, or the like. As such, the data, which is received wirelessly, can be audio data, video or image data, audio/video data, non-A/V data, software game information, or any combination thereof

The information transmission unit 701 transmits information to the server 20 on the reception environment of data multicast by a server 20. As described above, the information on the reception environment may include information on packet loss, jitter, electric field strength, and the like. Information on the reception environment may be transmitted to the server 20 according to the RTCP or RTSP.

The reception unit 702 receives data multicast by the server based on the information on the reception environment transmitted by the information transmission unit 701. The data multicast by the server may include information on an error correction method applied to the data. Multicasting of the data may be performed according to the RTP.

The error correction unit 703 performs error correction of the data received by the reception unit 702 according to a predetermined error correction method. The error correction unit 703 performs the error correction based on information on the error correction method transmitted by the server.

In embodiments of the present invention, clients receiving data are classified into a plurality of groups with respect to reception environments, and data to which a different error correction method is applied for each of the group is transmitted. In this way, wastage of bandwidth occurring when an identical error correction method is applied to all clients and data is transmitted can be reduced. Since a robust error correction method can be used for a group of clients having a poor reception environment, satisfaction of service consumers can be enhanced.

Multicasting techniques according to aspects of the present invention may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CDs and DVDs; magneto-optical media such as optical disks; and hardware devices that are specially configured to store and perform program instructions, such as read-only memory (ROM), random access memory (RAM), flash memory, and the like; and a computer data signal embodied in a carrier wave comprising a compression source code segment and an encryption source code segment (such as data transmission through the Internet). The computer readable recording medium can also be distributed over network coupled computer systems so that the computer readable code is stored and executed in a distributed fashion. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A multicasting method used by a server (20) for multicasting data to a plurality of clients (211, 212, 221), the method comprising:
receiving from the clients information on reception environments for each of the clients (300);
classifying the clients into a plurality of groups (21, 22) according to the reception environments included in the received information, the groups defining common reception environments as compared to the other group or groups (302); and
multicasting data in which a different error correction method is applied to the data for each of the groups (304).

2. The method of claim 1, wherein the multicasting of the data (304) comprises:
applying, for each group, a different forward error correcting encoding method to the data for each of the groups; and
multicasting the data to the respective groups using the different forward error correcting encoding method.

3. The method of claims 1 or 2, wherein the multicasting of the data (304) further comprises adding, for each group, redundancy data of a different size to the data for each of the groups for forward error correction prior to multicasting the data.

4. The method of claims 1, 2 or 3, wherein the multicasting of the data (304) further comprises:
generating a real-time transport protocol (RTP) packet by adding redundancy data of a different size to the data for each of the groups for forward error correction; and
multicasting the packet to the group.

5. The method of any preceding claim, wherein the multicasting of the data (304) comprises multicasting, to each group, information on a group to which each client belongs.

6. The method of any preceding claim, wherein the multicasting of the data (304) further comprises multicasting to each group a real-time transport control protocol (RTCP) or real-time streaming protocol (RTSP) packet including the information on the group.

7. The method of any preceding claim, wherein the receiving of the information (300) comprises receiving an RTCP or RTSP packet from the clients including information on the reception environment of the data.

8. The method of claim 7, wherein the information on the reception environment is information on at least one of packet loss and jitter, which occur when the clients receive the data.

9. The method of any preceding claim, wherein the data includes Internet protocol television (IPTV) service data and/or content data.

10. A multicasting apparatus to multicast data to a plurality of clients (211, 212, 221), the apparatus comprising:
an information reception unit (601) to receive information on reception environments from the clients;
a control unit (602) to classify the clients into corresponding groups (21, 22) based on reception environments detected from the received information, wherein each group (21, 22) is capable of including a plurality of clients in a common reception environment; and
a transmission unit (603) to multicast data by applying a different error correction method to each group.

11. The apparatus of claim 10, wherein the transmission unit (603) applies a different forward error correcting encoding method to the data for each of the plurality of groups (21, 22) and multicasts the data to the groups.

12. The apparatus of claim 10 or 11, wherein the transmission unit (603) adds redundancy data of a different size to the data for each of the groups (21, 22) for forward error correction.

13. The apparatus of claims 10, 11 or 12, wherein the transmission unit (603) generates an RTP packet by adding redundancy data of a different size to the data for each of the groups (21, 22) for forward error correction and multicasts the packets to the respective groups (21, 22).

14. The apparatus of any one of claims 10-13, wherein the transmission unit (603) multicasts to each group information on a group to which each client belongs.

15. The apparatus of any one of claims 10-14, wherein the transmission unit (603) multicasts to each group (21, 22) an RTCP or RTSP packet including the information on the group.

16. The apparatus of any one of claims 10-15, wherein the information reception unit (601) receives an RTCP or RTSP packet including information on the reception environment of the data from the clients (211, 212, 221).

17. The apparatus of claim 16, wherein the information on the reception environment is information on at least one of packet loss and jitter, which occur when the clients receive the data.

18. The apparatus of any one of claims 10-17, wherein the data includes at least one of IPTV service data and content data.

19. A system to efficiently multicast data, the system comprising:
clients to receive multicast data (211, 212, 221); and
at least one server (20) to classify a plurality of the clients (211, 212, 221) into a first group (21) according to a reception environment of each of the clients and to classify at least another one of the clients into a second group (22), to apply different error correction to multicast data destined for each of the clients (211, 212, 221) depending on the group (21,22) each client is a member of, and to multicast the corrected data to the clients (211, 212, 221).

20. A method of reducing bandwidth when multicasting data, the method comprising:
transmitting information on a data reception environment from a client to a server;
receiving multicast data from the server based on the information including information about a group of clients to which the client is assigned; and
performing error correction on the multicast data using an error correction method determined based on the information about the group of clients to which the client is assigned.

21. A client apparatus comprising:
an information transmission unit (701) to transmit information on a reception environment of the client apparatus to a server (20);
a reception unit (702) to receive data multicast by the server (20) based on the information transmitted by the information transmission unit (701), the data including information on a group to which the client apparatus is assigned, or both the group information and an error correction method reflecting the reception environment of the client apparatus;
an error correction unit (703) to perform error correction on the data based either on the group information detected from the data, or on the error correction method detected from the data and used by the group.
